# EUROPEAN PATENT APPLICATION

(11) **EP 3 842 365 A1**
(43) Date of publication of application: **30.06.2021**
(21) Application number: 19219197.1
(22) Date of filing: 23.12.2019
(51) Int. Cl.: B65G 43/08

(54) **A METHOD FOR TRANSFERRING OBJECTS IN CHANNELS AND A CHANNEL SYSTEM FOR TRANSFERRING OBJECTS FOR TOBACCO INDUSTRY**

(71) Applicant: International Tobacco Machinery Poland SP. Z O.O., 26-600 Radom (PL)
(72) Inventor: FIGARSKI, Radoslaw, 26-600 Radom (PL); LECH, Marek, 26-600 Radom (PL)
(74) Representative: Kancelaria Eupatent.pl Sp. z.o.o

(57) **Abstract**

A channel system (1) for transferring objects (O) for tobacco industry, comprising at least one channel (3), located between a feeding device (2) for feeding the objects and a receiving device (4) for receiving the objects (O), wherein the channel (3) has a transverse size that allows a transfer of the objects (O) in a series one after the other, characterized in that: the channel (3) has an inlet opening (5) and an outlet opening (6), between which there is at least one nozzle (7, 7a) for supplying compressed gas (15); the system (1) comprises at least one detector (8, 8a) for detecting a presence of the object (O) in the channel (3) and generating a detection signal (S3) correspondingly, the detector (8, 8a) being located between the inlet opening (5) and the outlet opening (6) of the channel (3); and the system (1) comprises a controller (9) configured to generate an activation signal (S2) for activating the nozzle (7, 7a) in response to a detection signal (S3) generated by the detector (8, 8a).

## Description

### TECHNICAL FIELD

The present disclosure relates to a method for transferring objects in channels and to a channel system for transferring objects for tobacco industry.

### BACKGROUND

In tobacco industry machines there is a need for transferring objects, such as aromatic capsules, between different sections of the machine, for example between a feeding device (for feeding objects in bulk form) and a receiving device (which is coupled with devices for inserting objects into products, for example into cigarette filters).

One of known solutions applied for this purpose are channel systems that comprise a series of channels, in which objects are transferred in streams one after the other.

There are known channel systems for transferring objects to receiving devices.

EP2405775 discloses a mechanism for feeding capsules on a machine for producing cigarette filters. The capsules loaded into a rotating dish are centrifugally displaced into ducts having a form of tubes, through which they are transferred to the device for inserting capsules into an acetate tow.

US7757835 discloses a system wherein capsules are transferred from a reservoir having a form of a bowl into radially and outwardly extending passageways, through which the capsules are further transferred to pockets distributed on the circumferential surface of a receiving disc. From the receiving disc, the capsules are inserted directly into a filter rod.

US20050070409 discloses a device for inserting capsules into a filter rod that is being formed, in which the capsules are collected from sockets of a reservoir by means of negative pressure through channels to a disc for inserting capsules into the filter rod that is being manufactured.

WO2018162608 discloses a system for feeding capsules in which the capsules loaded into a hopper are displaced gravitationally downward to a section of the hopper, in which they form a single layer, from where they are directed to channels by means of multiple rotary rolls arranged in a single row. Through the channels the capsules are transferred to a receiving device.

In this type of systems there is problem related to imperfections of objects that transported along the channel. In a mass of objects, for example spherical objects, which is fed from a feeding device, there may be spherical elements having imperfect dimensions, for example having a diameter greater than expected, having an irregular surface (for example being flattened), having a contaminated surface (for example the surface being contaminated or stuck with a substance from a broken object), or there may be fragments of broken spherical objects. When such objects enter into the channel, they may block the channel and consequently they may interrupt the supply of the spherical objects to the receiving device, leading to interruption of the entire production line section that follows the clogged channel.

In the currently known systems, when such situation occurs, it is necessary to stop the production line and to manually clean the clogged channel. This may lead to significant disturbances in the operation of the entire production line and may generate a large number of defective products.

Therefore, there is a need to improve the channel systems for transferring objects for the tobacco industry, such as to reduce interruptions in the delivery of objects to the receiving device, to improve the efficiency of the production line and/or to reduce the amount of defective products.

### SUMMARY

There is disclosed herein a channel system for transferring objects for tobacco industry, comprising at least one channel, located between a feeding device for feeding the objects and a receiving device for receiving the objects, wherein the channel has a transverse size that allows a transfer of the objects in a series one after the other, wherein: the channel has an inlet opening and an outlet opening, between which there is at least one nozzle for supplying compressed gas; the system comprises at least one detector for detecting a presence of the object in the channel and generating a detection signal correspondingly, the detector being located between the inlet opening and the outlet opening of the channel; and the system comprises a controller configured to generate an activation signal for activating the nozzle in response to a detection signal generated by the detector.

The nozzle for supplying the gas may be inclined towards the inlet opening of the channel.

The nozzle for supplying the gas may be inclined towards the outlet opening of the channel.

The controller may be configured to generate the activation signal for activating the nozzle after detecting the lack of presence of the object in the channel below the inlet opening.

The detector may be a proximity sensor, an infrared sensor, a microwave sensor, a laser sensor, an ultrasound sensor, or an optical sensor.

The compressed gas may be air, oxygen, carbon dioxide, nitrogen or another gas suitable for use in the tobacco industry.

A cross-section of the channel may be equal from 101% to 150% of a cross-section of the object.

The pressure of the compressed gas supplied to the channel may be equal from 0.5 to 4bars, preferably from 1 to 3bars.

The system may further comprise a rejection channel located above and/or below the nozzle, for transferring the objects out of the channel during the time when the nozzle is active.

The rejection channel may comprise a valve for closing and opening the flow of objects to the rejection channel.

The detector may be located between the nozzle and the outlet opening.

The detector may be located between the nozzle and the inlet opening.

The controller may be configured to generate the activation signal for activating the nozzle until the moment of detection of lack of presence of the object by the detector located between the nozzle and the inlet opening.

There is also disclosed herein a method for transferring objects for tobacco industry, from a feeding device to a receiving device by means of a channel system, the method comprising: controlling, during the transferring, a flow of the objects through at least one channel having an inlet opening and an outlet opening by means of at least one detector located between the inlet opening and the outlet opening; upon detecting a lack of flow of the objects through the channel, supplying compressed gas to the channel between the inlet opening and the outlet opening by means of at least one nozzle.

The solutions disclosed herein, as compared to the known systems, allow to reduce the amount of blockages in the channels which may cause interruptions in the delivery of objects to the receiving device. At least some blockages in the upper part of the channel may be eliminated by forced (by pressure) transfer of the objects out of the channel during short period of time, and refilling the lower portion of the channel by the flow of new objects through the unblocked upper portion of the channel before the receiving device collects all the objects present in the lower portion of the channel.

### BRIEF DESCRIPTION OF FIGURES

The present invention is shown by means of example embodiments in a drawing, in which:
Fig. 1 shows an example of configuration of a portion of a tobacco industry production line comprising a feeding device, a channel system for transferring objects and a receiving device;
Fig. 2 shows a channel with an undisturbed flow of objects;
Fig. 3a shows the channel at the time of onset of the disturbance;
Fig. 3b shows the channel at the moment when the disturbance increases;
Fig. 3c shows the channel at the moment of blowing through;
Fig. 3d shows the channel at the moment of blowing through in an embodiment with two detectors;
Fig. 3e shows the channel after the blowing through is finished;
Fig. 3f shows the channel at the moment of resumption of filling;
Fig. 4a shows the channel in the embodiment with two nozzles at the moment when the disturbance increases;
Fig. 4b shows the channel in the embodiment with two nozzles at the moment of blowing through with an upper nozzle;
Fig. 4c shows the channel in the embodiment with two nozzles at the moment of blowing through with a lower nozzle in a direction of an inlet opening;
Fig. 5 shows the channel, in another embodiment with two nozzles, at the moment of blowing through with a lower nozzle in the direction of an outlet opening;
Fig. 6a shows the channel in another embodiment comprising a rejection channel, at the moment when the disturbance increases;
Fig. 6b shows the channel comprising the rejection channel, during blowing through.

### DETAILED DESCRIPTION

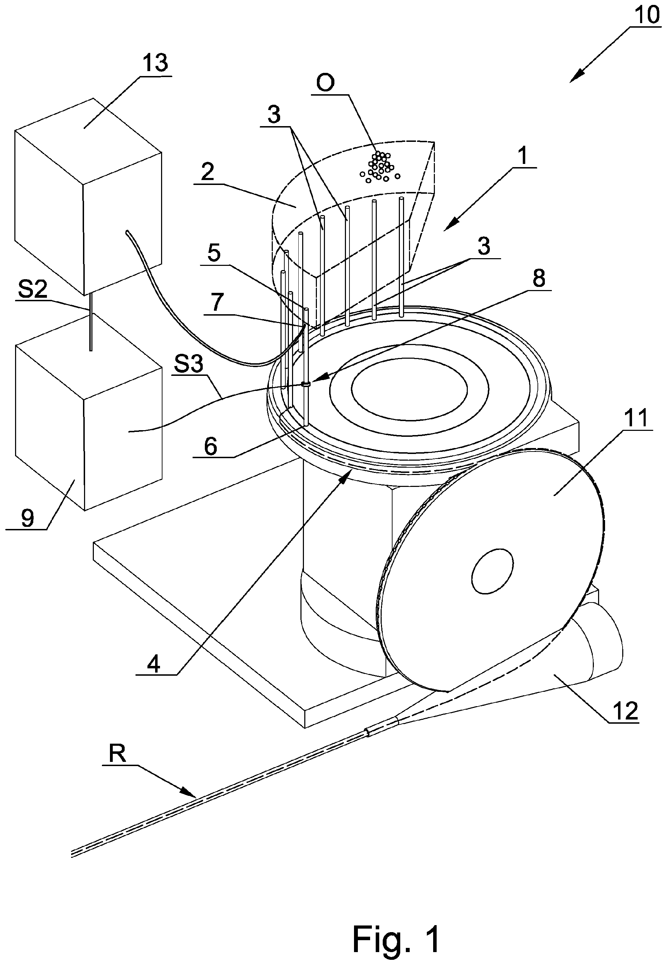

Fig. 1 shows a device 10 for feeding objects O into a tobacco industry filter rod that is being formed, wherein the device 10 comprises a channel system 1 for transferring the objects O.

The objects O may have a form of capsules with aromatic or fragrance substances, to be inserted into cigarette filters. Such channels are usually used to transport objects having a regular shape, for example a spherical shape or an oval shape.

The objects O are loaded to a feeding device 2 which may have a form of a rotary bowl or a vibrating bowl. The objects O are transferred (by the force of gravity or by means of a negative pressure) from the feeding device 2 to the transferring channel system 1. They are transferred (by the force of gravity or by means of negative pressure) along the channel 3 in a series one after the other in a direction of an outlet opening 6, passing through an inlet opening 5 of a channel 3. From the channel 3 the objects O are transferred through the outlet opening 6 to a receiving device 4. In this embodiment, the receiving device 4 has a form of a receiving disc with receiving pockets (which are not shown in the drawing) arranged along its circumference, wherein the objects O are received from the receiving pockets by means of a synchronized inserting disc 11. Next, by means of the inserting disc 11, the objects O are introduced through a forming funnel 12 in a defined spaced apart relationship into a filter rod R that is being formed. In an alternative embodiment, the inserting disc may introduce the objects O into cavities between the neighboring elements of the filter that are moved on a wrapper on a garniture belt, just before the wrapper is wrapped and the continuous filter rod is finally formed.

The receiving device 4 may have a form of a disc, a drum, a ring or it may be a different unit for receiving objects from the channel 3 and for transferring them to further process.

The channel transferring system 1 for transferring the objects O has at least one channel 3. The length of the channel 3 depends on the distance between the feeding device 2 and the receiving device 4. Preferably, the shape of a cross-section of the channel 3 is circular, but in other embodiments the channel may have the cross-section in a shape of an ellipse, a square, a triangle or another polygon. The size of the inlet opening 5, the outlet opening 6 and the cross-section of the channel 3 are designed such that the object O can freely enter the channel 3 and can pass through the channel without resistance and can exit the channel. The ratio between the size of the cross-section of the channel 3 and the size of the object O is equal from 101% to 150% (wherein the size is measured correspondingly to the object, for example for spherical object the size is defined as the diameter).

It may happen that, although the size parameters of the channel 3 are properly selected in accordance with the size of the objects O, the channel gets blocked. For example it may be caused by a defective, irregular object or by a contamination of the channel 3.

During the blockage of the flow of objects O through the channel 3, the lack of flow is detected by a detector 8 that is positioned within the area of the channel 3, between the inlet opening 5 and the outlet opening 6. In the embodiment shown in the figure, a single detector 8 is assigned to a single channel 3, but it is also possible to provide more than one detector 8 for the channel 3, as shown in the next embodiment.

The detector 8 may have a form of a proximity sensor, an infrared sensor, a microwave sensor, a laser sensor, an ultrasonic sensor, or an optical sensor.

The lack of flow of the objects O through the channel 3 may be detected as a lack of the objects in the channel 3 (i.e. when the objects 3 are not present in the channel 3) or it may be detected when the objects O are present in the channel 3, but are not being transferred in the direction of the outlet opening 6 or in the direction of the inlet opening 5.

When the detector 8 detects the lack of flow of the objects O through the channel 3, the detector sends a detection signal S3 to a controller 9, which generates an activation signal S2 for activating the nozzle 7. The activation signal S2 generated by the controller for activating the nozzle 7 may be sent directly to the nozzle 7 as shown in the following embodiments, or may be sent via a valve 13 which activates the nozzle. The direct activation may be performed for example by opening the valve which is located inside the nozzle 7, to which a compressed gas is supplied from a source of gas. By opening such valve the supply of the compressed gas to the channel 3 is provided. The indirect activation is performed by opening the valve 13 to which the compressed gas is supplied and which is in fluid communication with the nozzle 7.

Activating the nozzle 7 means that the compressed gas is introduced to the channel 3 through the nozzle. The compressed gas may be: air, oxygen, carbon dioxide, nitrogen or another gas suitable for use in the tobacco industry.

In this embodiment the nozzle 7 is located on the channel 3 above the detector 8. In further embodiments the nozzle may be located either below or above the detector 8.

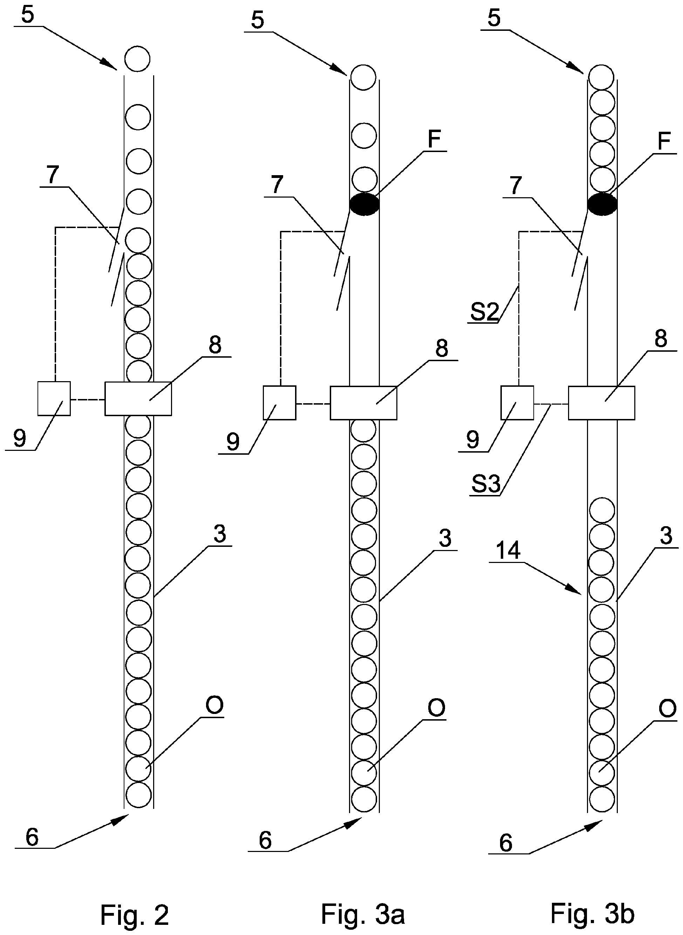

Fig. 2 shows the channel 3 of the channel system 1 with the object flowing through the channel in a situation when the flow of the objects O is not disturbed.

The objects O that are introduced to the channel 3 through the inlet opening 5 and in a series one after the other, are transferred towards the outlet opening 6. In such case the detector 8 does not detect the lack of flow of the objects O through the channel 3.

Fig. 3a shows the channel 3 at the time of onset of the disturbance that is caused by an object F blocked in the channel 3. The objects O begin to accumulate above the blockage, wherein under the blocked object F, the column 14 of accumulated objects O (which are gradually being received by the receiving device 4) decreases. When the column 14 of the objects O falls below the detector 8, and further objects O will not continue to enter at the side of the inlet opening 5, the detector 8 will detect the lack of flow and will generate the detection signal S3 to the controller 9, as shown in Fig. 3b.

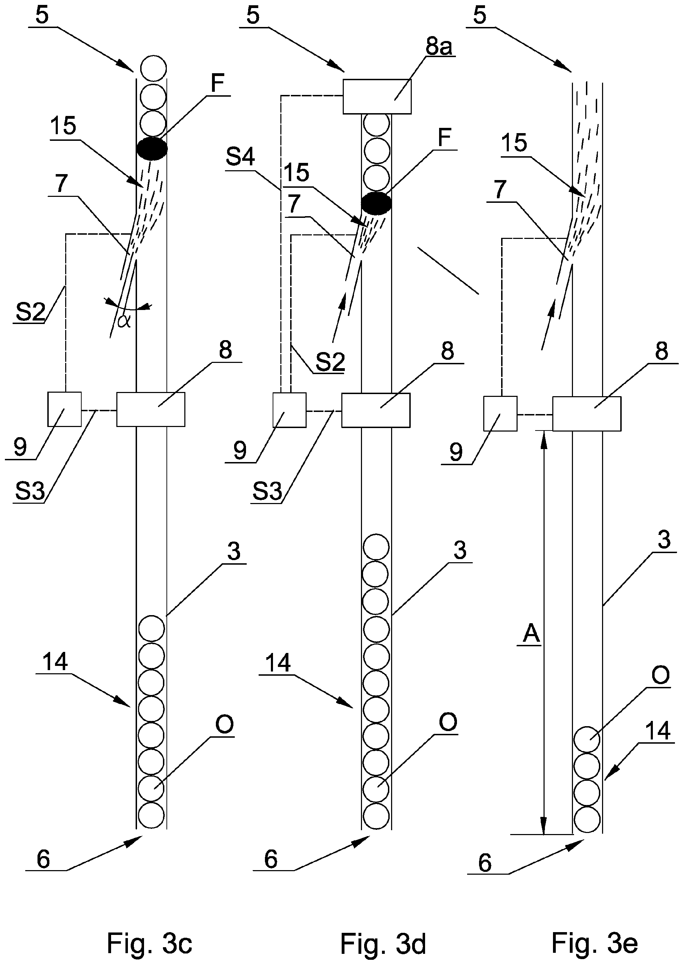

After receiving the detection signal S3 from the detector 8, the controller 9 generates the activation signal S2 which activates the nozzle 7. As a result of the activation of the nozzle 7, the compressed gas 15 is introduced into the channel 3 in a direction towards the inlet opening 5. The compressed gas 15 acting on the object F removes the blockage and transfers the object F together with the objects O outside the channel 3, as shown in Fig. 3c. The nozzle 7 is inclined with respect to the channel 3 at an angle α, therefore directs the stream of the compressed gas 15 towards the inlet opening 5. The pressure of the compressed gas 15 supplied to the channel 3 may be from 0.5 to 4bars, and preferably from 1 to 3bars. The angle α may be equal from 15° to 80°, and preferably from 35° to 55°.

Fig. 3d shows the channel 3 according to a second embodiment with two detectors 8 and 8a. After the channel 3 is blocked with the object F, the detector 8 detects lack of flow of the objects O through the channel 3 and generates the detection signal S3 to the controller 9. The controller 9 generates the activation signal S2 activating the nozzle 7, which introduces the compressed gas 15 into the channel 3. The compressed gas is supplied to the channel until the detector 8a detects the lack of flow and/or the lack of presence of the objects O and F in the channel 3. After detecting the lack of flow and/or the lack of presence of the objects O and F in the channel 3, the detector 8a generates a detection signal S4 to the controller 9. The detection signal S4 being sent to the controller 9 deactivates the nozzle 7.

The whole process, starting from the detector 8 detecting the lack of flow of the objects through the channel 3, generating the signal from the detector 8 to the controller 9, generating the activation signal S2 by the controller 9 activating the nozzle 7 and blowing through the channel 3 with the compressed gas 15, until the blockage is removed should last no longer than the time needed, in a process for collecting by the receiving device 4 consecutive objects O present in the column 14 in the channel 3 below the detector 9. Therefore, the length of a section A from the detector 8 to the outlet opening 6 of the channel 3 should be preferably sufficient for accumulating such amount of the objects O in the column 14 so that the time needed for their further collection by the receiving device 4 is sufficient for the performing the complete unblocking process of the channel 3 in case of blockage.

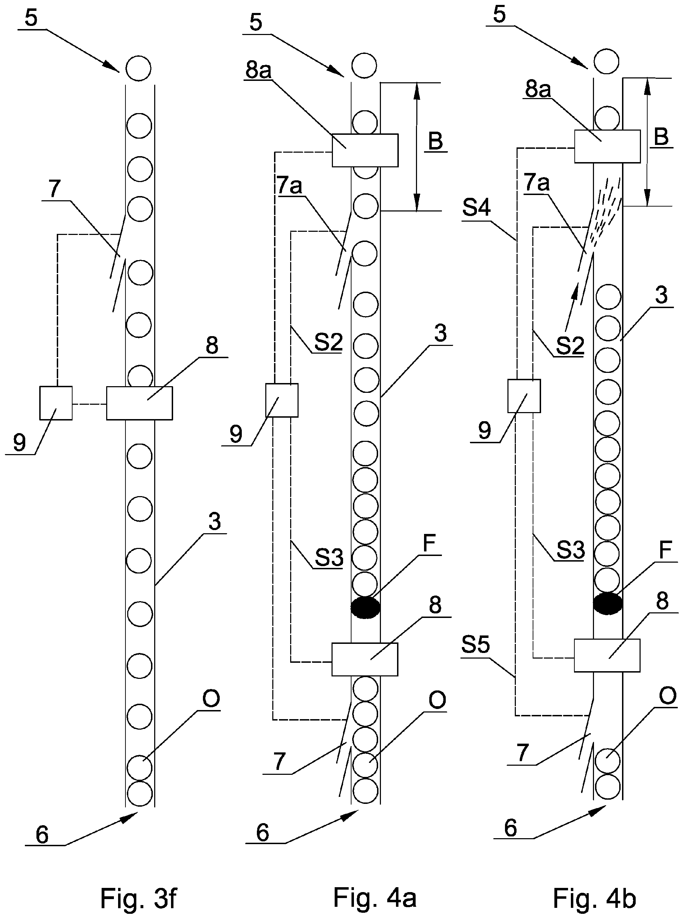

Fig. 3e shows the channel 3 of the channel system 1 after the objects O and F have been blown outside the channel 3. The whole process of the channel 3 blowing through shown in Fig. 3a-3e lasted less than the time needed to collect further objects O from the column 14 by the receiving device 4. After the channel 3 is blown through of the blockage, the channel is refilled with the objects O as shown in Fig. 3f.

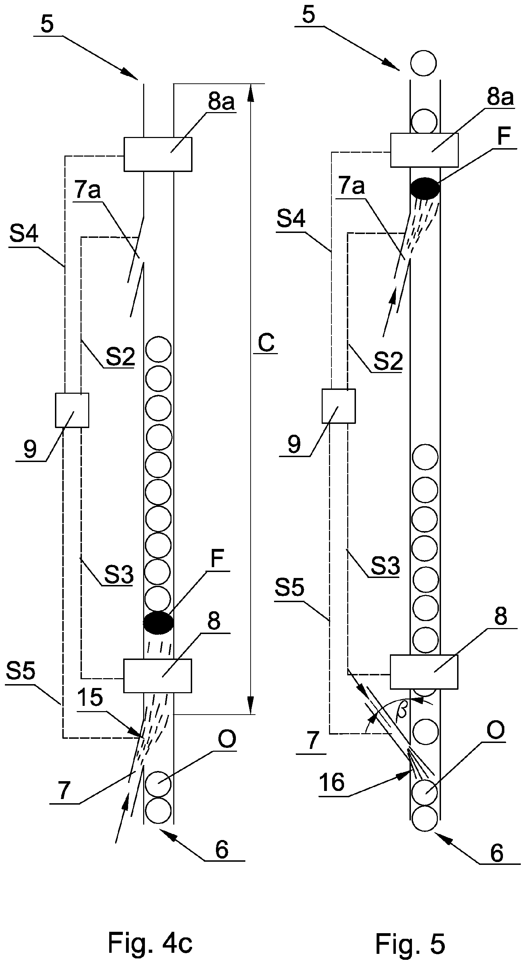

Fig. 4a shows the channel 3 of the channel system 1 in the embodiment with two detectors 8, 8a and two nozzles 7, 7a. The blockage of the channel 3 caused by the blocked object F is located below the first nozzle 7a. The detector 8 located below the blockage detects a lack of flow of the objects O through the channel 3 and generates the detection signal S3 to the controller 9. The controller 9 generates the activation signal S2 activating the nozzle 7a which blows off the object O, from the channel 3, located in a section B of the channel 3 above the nozzle 7a as shown in Fig. 4b. After the blowing through of the section B of the channel 3 from the objects O, the detector 8a detects lack of flow of the objects through the channel and generates the detection signal S4 to the controller 9. Next the controller 9 generates an activation signal S5 activating the nozzle 7 which is located below the detector 8 as shown in Fig. 4c. The nozzle 7 directing the stream of compressed gas 15 towards the inlet opening 5 of the channel 3, blows off the objects O and F outside the channel 3. The time of blowing through of the channel 3 by the nozzle 7 depends on the length of a section C of the channel 3. The longer is the section C, the longer is the blowing through time by the nozzle 7. In an alternative embodiment, the channel 3 may be blown through by the nozzle 7 until the detector 8a, located closer to the inlet opening 5, generates a signal informing about the lack of presence and the lack of flow of the objects O and F through the channel 3. In an alternative embodiment, the channel 3 may be blown through simultaneously by two nozzles 7 and 7a after the signal is generated by either of the detectors 8, 8a.

Fig. 5 shows another embodiment, wherein the nozzle 7 is directed towards the outlet opening 6 of the channel 3. After detecting the blockage and the lack of flow of objects O through the channel 3 by either of the detectors 8, 8a, the detection signal S3 and/or S4 is generated to the controller 9, which generates the activation signal S2 and/or S5 for activating the nozzle 7 and/or 7a. The nozzle 7 is inclined with respect to the channel 3 at an angle β which directs the stream of a compressed gas 16 towards the outlet opening 6. The angle β may be from 15°to 80°, preferably it may be from 35° to 55°.

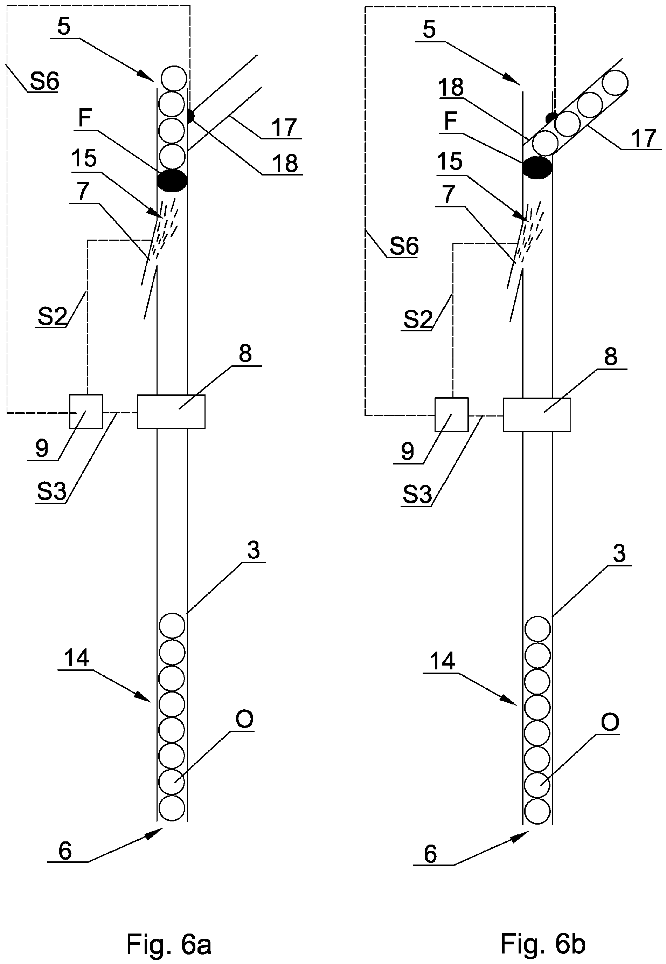

Fig. 6a shows another embodiment, wherein the channel 3 of the system 1 comprises a rejection channel 17, which is located above the nozzle 7. The rejection channel 17 is configured to reject the objects F out of the channel 3, such that they do not reenter the feeding device 2, such as not to re-block the channel 3. Together with the object F, the neighboring objects O in the channel 3 may be rejected. Moreover the channel 3 comprises a valve 18 located at the region of entrance to the rejection channel 17. During the undisturbed flow of the objects O through the channel 3, the valve 18 is in a position that allows the flow of the objects through the channel 3 from the inlet opening 5 to the outlet opening 6 and blocks the flow of the objects O to the rejection channel 17 as shown in Fig. 6a. When the detector 8 detects the lack of flow of objects O through the channel 3, it generates the detection signal S3 to the controller 9, which in turn generates the activation signal S2 activating the nozzle 7. The same controller generates a signal S6 activating the valve 18 and changing its position to the position in which the flow of the objects O through the inlet opening 5 is blocked and the flow into the rejection channel 17 is possible, as shown in Fig 6b.

## Claims

1. A channel system (1) for transferring objects (O) for tobacco industry, comprising at least one channel (3), located between a feeding device (2) for feeding the objects and a receiving device (4) for receiving the objects (0), wherein the channel (3) has a transverse size that allows a transfer of the objects (O) in a series one after the other, **characterized in that**:
- the channel (3) has an inlet opening (5) and an outlet opening (6), between which there is at least one nozzle (7, 7a) for supplying compressed gas (15);
- the system (1) comprises at least one detector (8, 8a) for detecting a presence of the object (O) in the channel (3) and generating a detection signal (S3) correspondingly, the detector (8, 8a) being located between the inlet opening (5) and the outlet opening (6) of the channel (3); and
- the system (1) comprises a controller (9) configured to generate an activation signal (S2) for activating the nozzle (7, 7a) in response to a detection signal (S3) generated by the detector (8, 8a).

2. The system according to claim 1, wherein the nozzle (7, 7a) for supplying the gas is inclined towards the inlet opening (6) of the channel (3).

3. The system according to claim 1, wherein the nozzle (7, 7a) for supplying the gas is inclined towards the outlet opening (6) of the channel (3).

4. The system according to any of previous claims, wherein the controller (9) is configured to generate the activation signal (S2) for activating the nozzle (7, 7a) after detecting the lack of presence of the object (O) in the channel (3) below the inlet opening (5).

5. The system according to any of previous claims, wherein the detector (8, 8a) is a proximity sensor, an infrared sensor, a microwave sensor, a laser sensor, an ultrasound sensor, or an optical sensor.

6. The system according to any of previous claims, wherein the compressed gas (15) is air, oxygen, carbon dioxide, nitrogen or another gas suitable for use in the tobacco industry.

7. The system according to any of previous claims, wherein a cross-section of the channel (3) is equal from 101% to 150% of a cross-section of the object (O).

8. The system according to any of previous claims, wherein the pressure of the compressed gas (15) supplied to the channel (3) is equal from 0.5 to 4bars, preferably from 1 to 3bars.

9. The system according to any of previous claims, further comprising a rejection channel (17) located above and/or below the nozzle (7, 7a), for transferring the objects (F, O) out of the channel (3) during the time when the nozzle (7) is active.

10. The system according to claim 9, wherein the rejection channel (17) comprises a valve (18) for closing and opening the flow of objects (O) to the rejection channel (17).

11. The system according to any of previous claims, wherein the detector (8, 8a) is located between the nozzle (7, 7a) and the outlet opening (6).

12. The system according to any of previous claims, wherein the detector (8, 8a) is located between the nozzle (7, 7a) and the inlet opening (5).

13. The system according to claim 12, wherein the controller (9) is configured to generate the activation signal (S2, S5) for activating the nozzle (7, 7a) until the moment of detection of lack of presence of the object by the detector (8a) located between the nozzle (7, 7a) and the inlet opening (5).

14. A method for transferring objects (O) for tobacco industry, from a feeding device (2) to a receiving device (4) by means of a channel system (1), the method **characterized in that** it comprises:
- controlling, during the transferring, a flow of the objects (O) through at least one channel (3) having an inlet opening (5) and an outlet opening (6) by means of at least one detector (8, 8a) located between the inlet opening (5) and the outlet opening (6);
- upon detecting a lack of flow of the objects (O) through the channel (3), supplying compressed gas (15) to the channel (3) between the inlet opening (5) and the outlet opening (6) by means of at least one nozzle (7, 7a).
